# EUROPEAN PATENT APPLICATION

(11) **EP 3 907 078 A1**
(43) Date of publication of application: **10.11.2021**
(21) Application number: 19856454.4
(22) Date of filing: 26.12.2019
(51) Int. Cl.: B32B 27/36, C08L 67/04, C08L 67/02, C08K 3/26

(54) **BIODEGRADABLE CONTAINER, METHOD FOR OBTAINING SAME AND USE THEREOF FOR CONTACT, TRANSPORT AND/OR STORAGE OF PERISHABLE PRODUCTS**

(30) Priority: 31.12.2018 ES 201831311
(71) Applicant: Nastepur, S.L., 46530 Puzol Valencia (ES)
(72) Inventor: LAGARÓN CABELLO, José María, 46530 Puzol (Valencia) (ES); TORRES GINER, Sergio, 46530 Puzol (Valencia) (ES); MELÉNDEZ RODRÍGUEZ, Beatriz, 46530 Puzol (Valencia) (ES); FIGUEROA LÓPEZ, Kelly Johana, 46530 Puzol (Valencia) (ES); CABEDO MAS, Luís, 46530 Puzol (Valencia) (ES); GÁMEZ PÉREZ, José, 46530 Puzol (Valencia) (ES); SÁNCHEZ SAFONT, Estefanía, 46530 Puzol (Valencia) (ES); ALDUREID, Abdulaziz, 46530 Puzol (Valencia) (ES)
(74) Representative: Pons
(86) International application number: PCT/ES2019/070886
(87) International publication number: WO 2020/141242

(57) **Abstract**

The present invention relates to a biodegradable container comprising a thermoformable structural layer with tear resistance and low cost, and optionally an adhesive barrier layer, an adhesive active layer and/or a layer in direct contact with the product, all of which are based on biodegradable polymers. Furthermore, the present invention relates to the method for obtaining same and to use thereof for contact, transport and/or storage of perishable products.

## Description

The present invention relates to a biodegradable packaging comprising a low-cost, tear-resistant thermoformable structural layer and optionally a self-adhesive gas and vapor barrier layer, a self-adhesive active layer and/or a layer for direct contact with the product, all being based on biodegradable polymers. Additionally, the present invention relates to its process of obtainment and to its use for contact with, transport and/or storage of perishable goods.

### BACKGROUND OF THE INVENTION

At present, food packaging represents the highest consumption of plastic materials, around 40 % [C. Silvestre, D. Duraccio, S. Cimmino, Food packaging based on polymer nanomaterials, Progress in Polymer Science 36(12) (2011) 1766-1782]. Conventional plastics present two major environmental problems, on one hand, most are derived from non-renewable fossil fuels (typically oil), and on the other, they can take hundreds of years to decompose in the environment, building up in different natural settings. In this regard, bioplastics are shaping up to be a much more environmentally sustainable source given that they can be obtained from natural and biodegradable sources, i.e. they can be transformed into simple substances by the direct action of living organisms and thus be more quickly eliminated from the environment. However, bioplastics are still not positioned on the market of plastic materials used for food packaging because many of them come from and compete with the same sources as the foods and their performance is inferior to that of conventional plastics, particularly in relation to barrier properties against low molecular weight molecules (for example, water vapor and oxygen). This may entail a problem both for guaranteeing the raw material supply, and for the quality and safety of certain foodstuffs requiring high-barrier packaging. One of the biopolymers with barrier properties that spark the greatest interest are microbial polymers called polyhydroxyalkanoates (PHA). The drawbacks of these biopolymers include their high cost, poor or nil thermoformability and their excessive brittleness and poor tear resistance. In this regard, various scientific papers have reported that both poly(3-hydroxybutyrate) (PHB) and poly(3-hydroxybutyrate-co-valerate) (PHBV) exhibit high rigidity and elastic limit but poor ductility and toughness, due primarily to their high crystallinity, which limits their application in the development of food packaging. For example, PHBV films obtained by thermocompression techniques present Young's modulus values in the range of 1000-3000 MPa and an elastic limit of 20-40 MPa. Therefore, PHB or PHBV films present a certain mechanical similarity with conventional polymers, such as polyethylene terephthalate (PET), polystyrene (PS), polypropylene (PP) or polycarbonate (PC), whereby they may be of interest for the development of rigid packaging [Savenkova, L.; Gercberga, Z.; Nikolaeva, V.; Dzene, A.; Bibers, I.; Kalnin, M. Mechanical properties and biodegradation characteristics of PHB-based films. Process Biochemistry 2000, 35, 573-579]. However, PHBV films are also excessively brittle, presenting strain at break values less than 6 %, which means they must be modified for use in packaging applications. Associated with this brittleness is one of the main problems for these materials to be applied in food packaging: their low tear resistance which compromises processing and subsequent handling. The high crystallinity of these materials also restricts their processability by means of thermoforming processes. Indeed, PHB and PHBV can only be thermoformed within a narrow range of temperatures that are close to their melting points. This circumstance brings about the occurrence of a sagging phenomenon before spinning, which is associated with a considerable loss of mechanical stability. This characteristic, therefore, limits the possible geometries and their widespread use for obtaining packaging by thermoforming compared with conventional polymers.

The use of multilayer systems allows obtaining high-barrier packaging which even present different functionalities such as, for example, active or bioactive properties. This methodology is well developed in the industry for conventional polymers, which allows, at present, obtaining packaging with the physical properties required for food preservation. However, in the case of biopolymers, and particularly polyhydroxyalkanoates (PHA), the generation of high-barrier biodegradable multilayers is unfeasible without the use of non-biodegradable synthetic adhesives.

In this context, the development of patents for obtaining multilayers from biopolymers in the field of packaging has been scarce. For example, certain multilayer structures of biopolymers can be obtained by using, as an adhesive, binary mixtures from the biopolymers used in the other (outer) layers. In this case, by means of a mixture of poly(butylene adipate-co-terephthalate) (PBAT) with an aliphatic polyester, typically polylactide (PLA) or polyhydroxyalkanoate (PHA), multilayer structures of PBAT can be generated with polylactide PLA or polyhydroxyalkanoates PHAs having mechanical properties adapted to the needs of the packaging material. However, these structures are still devoid of a high barrier against gases or even water vapor unless they are laminated with metal substrates (for example, metallizing). In any case, the multilayers need biodegradable adhesive layers, are not thermoformable and/or continue to have tear resistance problems.

According to this background, new thermoformable and tear-resistant biodegradable packaging overcoming the aforementioned drawbacks need to be developed.

### DESCRIPTION OF THE INVENTION

The present invention relates to a biodegradable packaging for foods preferably based on circular bioeconomy, that is, it uses as raw materials agri-food waste, comprising a low-cost, tear-resistant thermoformable structural layer based on polyhydroxyalkanoates (PHAs) which optionally comprises a self-adhesive barrier layer, a self-adhesive active layer and/or a layer for direct contact with the perishable good, particularly with a food. All the mentioned layers are based on biodegradable polymers preferably derived from agri-food, urban or industrial waste and are preferably made by an electrodynamic electrospinning process. Said layers additionally confer to the packaging adhesive, barrier and active properties, as well as tear resistance to the structural layer.

The main biodegradable polymeric components of a renewable origin of the layers forming the packaging of the present invention are polyhydroxyalkanoates PHAs. For example, and in a non-limiting sense, poly(3-hydroxybutyrate) and poly(3-hydroxybutyrate-co-3-valerate), which are a homopolyester and a copolyester, respectively, and present good mechanical strength and relatively high oxygen and water vapor barrier properties.

Additionally, the present invention relates to the process of obtaining same, comprising a step of manufacturing the thermoformable structural layer by means of melt extrusion and
- optionally a step of manufacturing the self-adhesive gas and vapor barrier layer by means of electrodynamic processes, aerodynamic processes or a combination of both,
- optionally a step of manufacturing the self-adhesive active layer by means of electrodynamic processes, aerodynamic processes or a combination of both,
- optionally a step of manufacturing the layer for direct contact with the product by means of melt extrusion, electrodynamic processes, aerodynamic processes or a combination of the latter two, and a final thermoforming step.

Lastly, the present invention relates to the use of the packaging of the present invention for contact, transport or storage of perishable goods such as cosmetics, pharmaceuticals, biomedical products, electronics and foodstuffs.

In a first aspect, the present invention relates to a biodegradable packaging (hereinafter "the packaging of the present invention"), characterized in that it comprises a thermoformable structural layer (a) configured for providing to the packaging rigidity, mechanical strength, tear resistance and thermoformability, having a thickness between 0.015 mm and 10 mm, which comprises a resin and functional additives.

The resin comprises:
- a polymer matrix providing rigidity, selected from polyhydroxyalkanoates (PHAs), for example and in a non-limiting sense, preferably PHB or PHBV; PLA, and a combination thereof, at a content of up to 75 % with respect to the total resin;
- a second biodegradable high-ductility polymer phase, called elastomeric phase, for example, and in a non-limiting sense, selected from polyurethanes, elastomeric polyhydroxyalkanoates, biodegradable thermoplastic elastomers, polycaprolactones and polylactic acid at a content of up to 50 % with respect to the total resin;
wherein the sum of the percentages by weight of the polymer matrix and of the second polymer phase does not exceed 100 % in the resin.

Example of this second polymer phase in a non-limiting sense are thermoplastic polyurethanes (TPU), polyhydroxyalkanoates (PHAs) of the PHBV type with high HV contents, i.e. greater than 7 mol%, polyhydroxybutyrate octanoate (PHBO), polyhydroxybutyrate hexanoate (PHBH), SCL-PHA, MCL-PHA and LCL-PHA, where the polyhydroxyalkanoates (PHAs) have a short, medium and long chain length.

More examples of a second polymer phase, and in a non-limiting sense, are biodegradable thermoplastic elastomers, polycaprolactone (PCL), PLA oligomers, poly(butylene adipate-co-terephthalate) (PBAT), polybutylene succinate (PBS), or polybutylene succinate-co-adipate (PBSA) and thermoplastic starches (TPS).

The resin described above can include any type of process additives typically used by the plastics industry for the purpose of, and in a non-limiting sense, nucleating, plasticizing, stabilizing and facilitating the processing of polymers. These additives are typically incorporated in the commercial plastics forming the components of the resin.

The packaging of the present invention comprises, in addition to the resin described above, other additives, referred to as functional additives in this invention, which are selected from
- a rigid mineral filler at a content of up to 70 phr (70 parts for every 100 parts of resin),
- compatibilizing additives at a content of up to 10 phr (10 parts for every 100 parts of resin), and
- a combination thereof.

The mineral filler is configured for lowering costs and/or providing tear resistance and stability during thermoforming at a content of up to 70 phr; it is preferably selected from clays, calcium carbonate, hydrotalcites or double hydroxides, boron nitride, titanium dioxide, with or without being organomodified, and a combination thereof.

Mentioned as examples and in a non-limiting sense are talc, layered and tubular clays, calcium carbonate, hydrotalcites or double hydroxides, boron nitride, titanium dioxide, with or without being organomodified, and a combination thereof.

The compatibilizing additives are capable of chemically reacting with the aforementioned polymers and/or fillers at a content of up to 10 phr; they are preferably selected from peroxides, isocyanurates, diisocyanates, acrylates, epoxy resins and compounds with epoxide functionality, phosphates, phosphites, polycarbodiimide, vegetable oils multi-functionalized with acrylate, epoxide or maleic groups, and a combination thereof.

Mentioned as examples and in a non-limiting sense are:
- peroxides such as dicumyl peroxide (DCP), di-(2-tert-butyl-peroxyisopropyl)-benzene (BIB), 2,5-dimethyl-2,5-di(tert-butylperoxy)-hexane organic peroxide, diamyl peroxide (DAPO), tert-butyl cumyl peroxide (TBCP), di-tert-butyl peroxide (DTBP) and other organic peroxides
- isocyanurates such as triglycidyl isocyanurate (TGIC) and tris[2-(acryloyloxy)-ethyl] isocyanurate
- diisocyanates such as hexamethylene diisocyanate (HMDI), poly(hexamethylene diisocyanate) (pHDI), isophorone diisocyanate, 1,4-phenylene diisocyanate, 1,3-phenylene diisocyanate, 4,4'-methylenebis(phenyl isocyanate), 4,4'-diphenylmethane diisocyanate, toluene diisocyanate (TDI), 1,3-bis(isocyanatomethyl) benzene and trans-1,4-cyclohexylene diisocyanate

- acrylates such as glycidyl methacrylate, poly(glycidyl methacrylate), poly(ethylene-co-glycidyl methacrylate)and poly(ethylene-co-methyl acrylate-co-glycidyl methacrylate).
- epoxy resins such as styrene-acrylate oligomers functionalized with epoxide groups (Epoxy-based Styrene-Acrylic Oligomers, ESAOs) and other compounds with epoxide functionality, such as diglycidyl ether, resorcinol diglycidyl ether, bisphenol A diglycidyl ether, diglycidyl 1,2-cyclohexanedicarboxylate, poly(ethyleneglycol) diglycidyl ether, glycerol diglycidyl ether, 1,4-butanodiol diglycidyl ether and bisphenol F diglycidyl ether.
- phosphates,
- phosphites such as tris(nonylphenyl) phosphite (TNPP) and tris (2,4-di-tert-butylphenyl)phosphite,
- polycarbodiimide (PCDI),
- vegetable oils multi-functionalized with acrylate, epoxide or maleic groups, and a combination thereof.

In a preferred embodiment of the packaging of the present invention, the thermoformable structural layer (a) further comprises as a functional additive
- a renewable and/or biodegradable rigid filler at a content of up to 40 phr.

The renewable and/or biodegradable rigid filler preferably comes from agri-food, urban or industrial waste and is configured for lowering costs and facilitating thermoforming at a content of up to 40 parts for every 100 parts of resin (phr), i.e. 40 g added to every 100 g of resin containing polymers, therefore rendering a total of 140 g; it is preferably selected from cellulose, lignocellulosic fillers, and a combination thereof;
Mentioned as examples and in a non-limiting sense are celluloses and lignocellulosic fillers derived from waste such as almond or walnut flour, various plant fibers coming from the leaf, stem, root, fruit or shell, including first-use or recycled garden and park waste.

Preferably, the packaging of the present invention has a thickness between 0.015 mm and 10 mm, which are thicknesses used for obtaining, for example, thermoformed trays. More preferably, the thermoformable packaging of the present invention has a thickness between 0.1 and 1 mm.

In a preferred embodiment of the packaging of the present invention, the polymer matrix containing polyhydroxyalkanoate is selected from poly(3-hydroxybutyrate), poly(3-hydroxybutyrate-co-valerate), polylactic acid, and a combination thereof. In another even more preferred embodiment of the packaging of the present invention, the polymer matrix containing polyhydroxyalkanoate is made of polyhydroxybutyrate (PHB).

In a preferred embodiment of the second polymer matrix of the thermoformable structural layer (a) of the packaging of the present invention, said layer contains poly(butylene adipate-co-terephthalate) (PBAT) and poly(3-hydroxybutyrate-co-valerate) (PHBV), wherein the molar concentration of HV in PHBV is between 1 and 80, and more preferably between 7 and 60.

In a preferred embodiment of the packaging of the present invention, said packaging comprises:
∘ a resin comprising
   - a polymer matrix containing polyhydroxyalkanoate at a percentage by weight of 60 % with respect to the total resin,
   - a second biodegradable elastomeric polymer phase at a percentage by weight of 40 % with respect to the total resin,
∘ a mineral filler containing calcium carbonate, with or without being organomodified, at a content of 20 phr (20 parts for every 100 parts of resin)
∘ and a compatibilizing additive at a content of 2 phr (2 parts for every 100 parts of resin).

In the present invention, "mineral filler containing calcium carbonate, with or without being organomodified" is understood to mean a filler containing calcium carbonate of any origin, precipitated or natural, either being used in the state in which it is obtained or mechanically treated to control its size and size dispersion, or being chemically modified, also referred to as coated calcium carbonate, with an organic compound and/or with its salts for the purpose of facilitating its disintegration and reduction in size and/or reducing hydrophilicity and thus increasing compatibility with plastic matrices. Among those organomodified elements, those that are of the most interest for the application of this invention are the grades using organic modifications allowed by legislation relating to contact with foods.

In another preferred embodiment of the packaging of the present invention, said packaging comprises:
∘ a resin comprising
   - a polymer matrix containing polyhydroxyalkanoate at a percentage by weight of 50 % with respect to the total resin,
   - a second biodegradable elastomeric polymer phase at a percentage by weight of 50 % with respect to the total resin,
∘ a renewable and biodegradable filler containing cellulose at a content of 10 phr (10 parts for every 100 parts of resin),
∘ a mineral filler containing calcium carbonate, with or without being organomodified, at a content of 20 phr (20 parts for every 100 parts of resin)
∘ and a compatibilizing additive at a content of 2 phr (2 parts for every 100 parts of resin).

Optionally, the packaging of the present invention may further contain layers configured for increasing tear resistance and providing barrier, active and contact properties.

In a preferred embodiment the packaging of the present invention, said packaging further comprises a self-adhesive gas and vapor barrier layer (b), having a thickness between 0.1 µm and 100 µm, preferably between 1 µm and 25 µm, located on the structural layer (a) comprising a coating in the form of electrospun fibers of polymers and biopolymers with gas and vapor barrier properties, particularly oxygen barrier properties, such as, and in a non-limiting sense, polyhydroxyalkanoates (PHAs), proteins, polysaccharides, lipids, polylactic acid (PLA), polyvinyl alcohol (PVOH), ethylene-vinyl alcohol copolymers (EVOH29, EVOH32, EVOH44, etc.), poly(vinylidene chloride) (PVDC), poly(lactic-co-glycolic acid) (PGLA) and poly(glycolic acid) (PGA).

Additionally, the fibers of the coating may contain particles, including nanometric sized particles, and/or sheets having a nanometric thickness therein configured for increasing the barrier properties of the self-adhesive gas and vapor barrier layer (b), particularly oxygen barrier properties. Said particles and/or sheets are at a percentage by weight of between 0.01 % and 40 % with respect to the polymeric total of the self-adhesive gas and vapor barrier layer (b).
Examples of nanoparticles in a non-limiting sense are cellulose nanocrystals (CNC), nanofibrillated cellulose (NFC), microfibrillated cellulose (MFC) and bacterial nanocellulose (BNC), with or without being organomodified.
Examples of sheets having a nanometric thickness are those formed by, in a non-limiting sense, nanoclays, hydrotalcites or layered double hydroxides, carbon derivatives such as graphene, carbon nanotubes and nanofibers, with or without being organomodified, and a combination thereof.

In another preferred embodiment of the packaging of the present invention, the packaging of the present invention further comprises a gas and vapor barrier layer obtained by casting (b) of cellulose (CNC), nanofibrillated cellulose (NFC), microfibrillated cellulose (MFC), bacterial nanocellulose (BNC), with or without being organomodified, and a combination thereof.

There are several options to facilitate anchoring to the structural layer (a):
In a preferred embodiment of the packaging of the present invention, the packaging further comprises a self-adhesive layer, located between layers (a) and (b) and/or on layer (b), of electrospun fibers of polymers and biopolymers selected from polyhydroxyalkanoates, proteins, polysaccharides, lipids, polylactic acid, polyvinyl alcohol, ethylene-vinyl alcohol copolymers, poly(vinylidene chloride), poly(lactic-co-glycolic acid) and poly(glycolic acid).
- In another preferred embodiment of the packaging of the present invention, it is possible to apply to the thermoformable structural layer (a) of the packaging a surface activation treatment such as, and in a non-limiting sense, a corona treatment or the like, if needed, to facilitate adhesion with the self-adhesive gas and vapor barrier layer (b).
- In the present invention, "corona treatment" is understood to mean the surface activation treatment of the thermoformable structural layer (a) consisting of the application of a plasma discharge on the surface of the polymeric film and favoring adhesion of a second layer.

It should be pointed out that the advantage of using a self-adhesive layer, located between layers (a) and (b) and/or on layer (b), of electrospun fibers of polymers and biopolymers for acting as an adhesive would be that adhesion need not be additionally promoted with surface activation treatments such as the corona treatment. The bonding of the layers is performed by means of a thermal treatment at moderate temperatures (annealing) optionally under pressure, either before or during the final thermoforming process of the packaging.

Preferably, the packaging of the present invention further comprises at least one self-adhesive electrospun active layer (c) selected from
- a self-adhesive antimicrobial active layer (c), having a thickness between 0.1 µm and 100 µm, located on the self-adhesive gas and vapor barrier layer (b) consisting of an electrospun layer of biodegradable polymer, preferably polyhydroxyalkanoate, comprising an antimicrobial active agent, or
- a self-adhesive active layer (c), having a thickness between 0.1 µm and 100 µm, located on the self-adhesive gas and vapor barrier layer (b) consisting of an electrospun layer of biodegradable polymer, preferably polyhydroxyalkanoate, comprising at least one active agent selected from oxygen scavengers, moisture absorbers, flavor regulators, ethylene absorbers, and a combination thereof.

The self-adhesive active layer (c) is antimicrobial and is configured for increasing tear resistance, conferring adhesive properties and preventing the formation or growth of pathogens in the packaging. Said self-adhesive antimicrobial active layer (c) has a thickness between 0.1 µm and 100 µm, preferably between 1 µm and 25 µm, and is located on the self-adhesive gas and vapor barrier layer (b). Said self-adhesive antimicrobial active layer (c) consists of an electrospun layer of a biodegradable polymer, preferably polyhydroxyalkanoate (PHA) comprising an antimicrobial active agent, wherein said antimicrobial active agent can be based on:
- antimicrobial organic compounds such as essential oils and natural extracts, such as, for example, oregano, cinnamon, clove, mint, rosemary, green tea, ginger, lemon, garlic, black pepper, nutmeg, cumin, eucalyptus, fennel, lime, marjoram, apricot, basil, thyme, turmeric, lavender, vanilla, coriander, anthocyanins, phenolic extracts, quinones, saponins, flavonoids, tannins, coumarins, terpenoids, alkaloids, organic acids such as, for example, lactic acid, malic acid, citric acid, acetic acid, propionic acid, benzoic acids, polymers such as chitosan, enzymes, for example lysozyme, lactoferrins, lactoperoxidase, glucose oxidase, ε-polylysine, peroxidase, and bacteriocins, such as, for example, natamycin, pediocin and nisin, and mixtures of all of the above.
- antimicrobial inorganic compounds such as metallic materials, such as, for example, silver micro- or nanoparticles (AgNPs), gold micro- or nanoparticles (AuNPs), copper micro- or nanoparticles (CuNPs), platinum micro- or nanoparticles (PtNPs), and metal oxides such as, for example, zinc oxide (ZnO), titanium oxide (TiO₂), magnesium oxide (MgO), and mixtures of all of the above.

The self-adhesive active layer (c) comprising at least one active agent selected from oxygen scavengers, moisture absorbers, flavor regulators, ethylene absorbers, and a combination thereof, is configured for increasing tear resistance, providing adhesive properties and conferring different active properties to the packaging other than antimicrobial properties. Said active layer (c) has a thickness between 0.1 µm and 100 µm, preferably between 1 µm and 25 µm, and is located on the self-adhesive gas and vapor barrier layer (b) and consists of an electrospun layer of a biodegradable polymer, preferably polyhydroxyalkanoate (PHA) comprising at least one active agent selected from oxygen scavengers, moisture absorbers, flavor regulators, ethylene absorbers, and a combination thereof.

Examples in a non-limiting sense are:
- organic oxygen "scavengers", such as ascorbic acid, catechol, ascorbate salts, oxygen scavenging polyamides, and/or inorganic scavengers such as iron (Fe), cerium oxide, palladium (Pd), catalyzed cobalt (Co) and mixtures of all of the above,
- moisture absorbers, such as starch copolymers, carboxymethylcellulose (CMC), salts of polyacrylate, diatomaceous earth, silica gel, propane-1,2-diol and polyvinyl alcohol (PVOH),
- flavor regulators, such as cellulose triacetate, citric acid, acetylated paper, activated carbon, zeolites, clays and ascorbate,
- ethylene absorbers, such as palladium chloride (PdCl₂), copper sulfate (CuSO₄), silver (Ag), titanium oxide (TiO₂), nickel (Ni), silica gel-potassium and clays,
- a combination thereof.

In another preferred embodiment of the packaging of the present invention, the packaging further comprises a self-adhesive active layer (c) having a thickness between 0.1 µm and 100 µm, located on the self-adhesive gas and vapor barrier layer (b) consisting of an electrospun layer of biodegradable polymer, preferably polyhydroxyalkanoate, comprising an active agent selected from oxygen scavengers, moisture absorbers, flavor regulators, ethylene absorbers, an antimicrobial agent, and a combination thereof.

In a preferred embodiment, the packaging of the present invention further comprises a layer for direct contact with the product (d) configured for being in direct contact with the packagingd product, limiting the migration of active agents and/or acting as a functional barrier against migration. Said layer for direct contact with the product is placed on the active layer and has a thickness between 10 µm and 100 µm, preferably below 50 µm, made, in a non-limiting sense, from biodegradable polymers for contact with the product; preferably based on polyhydroxyalkanoates (PHAs).

Another aspect of the present invention relates to the method of obtaining the packaging aforementioned, which is characterized by comprising a step of manufacturing the thermoformable structural layer (a) by means of melt extrusion and
- optionally a step of manufacturing the self-adhesive gas and vapor barrier layer (b) by means of electrodynamic processes, aerodynamic processes or a combination of both,
- optionally a step of manufacturing the self-adhesive active layer (c) by means of electrodynamic processes, aerodynamic processes or a combination of both,
- optionally a step of manufacturing the layer for direct contact with the product (d) by means of melt extrusion, electrodynamic processes, aerodynamic processes or a combination of the latter two, i.e. a combination of electrodynamic processes and aerodynamic processes.
- and a final thermoforming step.

The thermoformable structural layer (a) is manufactured by means of melt extrusion.

The self-adhesive gas and vapor barrier layer (b) is manufactured by means of electrodynamic processes, aerodynamic processes or a combination of both, preferably by means of the electrodynamic electrospinning process.

The self-adhesive active layers (c) selected from
- a self-adhesive antimicrobial active layer (c), having a thickness between 0.1 µm and 100 µm, located on the self-adhesive gas and vapor barrier layer (b) consisting of an electrospun layer of biodegradable polymer, preferably polyhydroxyalkanoate, comprising an antimicrobial active agent, or
- a self-adhesive active layer (c), having a thickness between 0.1 µm and 100 µm, located on the self-adhesive gas and vapor barrier layer (b) consisting of an electrospun layer of biodegradable polymer, preferably polyhydroxyalkanoate, comprising at least one active agent selected from oxygen scavengers, moisture absorbers, flavor regulators, ethylene absorbers, and a combination thereof; and
- a combination thereof
are manufactured by means of electrodynamic processes, aerodynamic processes or a combination of both.

The self-adhesive layer (c) having a thickness between 0.1 µm and 100 µm, located on the self-adhesive gas and vapor barrier layer (b) consisting of an electrospun layer of biodegradable polymer, preferably polyhydroxyalkanoate, comprising an active agent selected from oxygen scavengers, moisture absorbers, flavor regulators, ethylene absorbers, an antimicrobial agent, and a combination thereof, are manufactured by means of electrodynamic processes, aerodynamic processes or a combination of both.

Examples of "electrodynamic processes" in the present invention are electrospinning or electrospraying.

Examples of "aerodynamic processes" in the present invention are solution blow spinning or solution blow spraying.

The layer for direct contact with the product (d) is manufactured by means of melt extrusion, for example and in a non-limiting sense extrusion by casting or by blowing, electrodynamic processes, aerodynamic processes or a combination of the latter two, i.e. a combination of electrodynamic processes and aerodynamic processes.

In a preferred embodiment of the method of the present invention, when the present invention comprises all the layers, said method is characterized in that it comprises the following steps:
i) manufacturing a thermoformable structural layer (a) by means of melt extrusion;
ii) manufacturing a self-adhesive gas and vapor barrier layer (b) on the structure obtained in (i) by means of electrodynamic processes, aerodynamic processes or a combination of both;
iii) manufacturing
   - at least one self-adhesive active layer (c) on the structure obtained in (ii) selected from
      - a self-adhesive antimicrobial active layer (c), having a thickness between 0.1 µm and 100 µm, located on the self-adhesive gas and vapor barrier layer (b) consisting of an electrospun layer of biodegradable polymer, preferably polyhydroxyalkanoate, comprising an antimicrobial active agent, or
      - a self-adhesive active layer (c), having a thickness between 0.1 µm and 100 µm, located on the self-adhesive gas and vapor barrier layer (b) consisting of an electrospun layer of biodegradable polymer, preferably polyhydroxyalkanoate, comprising at least one active agent selected from oxygen scavengers, moisture absorbers, flavor regulators, ethylene absorbers, and a combination thereof; and
      - a combination thereof;
   - or a self-adhesive active layer having a thickness between 0.1 µm and 100 µm, located on the self-adhesive gas and vapor barrier layer (b) consisting of an electrospun layer of biodegradable polymer, preferably polyhydroxyalkanoate, comprising an active agent selected from oxygen scavengers, moisture absorbers, flavor regulators, ethylene absorbers, an antimicrobial agent, and a combination thereof;
   by means of electrodynamic processes, aerodynamic processes or a combination of both;
iv) manufacturing a layer for direct contact with the product (d) on the structure obtained in (iii) by means of melt extrusion, electrodynamic processes, aerodynamic processes or a combination of the latter two, i.e. a combination of electrodynamic processes and aerodynamic processes;
   and
v) thermoforming the final structure obtained in step (iv).

More preferably, step (iii) of said method is carried out by means of an electrodynamic electrospinning process.

More preferably, step (iv) of said method is carried out by means of a casting or blow extrusion process.

In another preferred embodiment of the method of the present invention, step (iv) further comprises a step (iv') between step (iv) and step (v) for thermal treatment at a temperature less than the melting temperature of the structural layer (a).

The biodegradable packaging of the present invention is selected, in a non-limiting sense, from the list consisting of trays, plates, bags, blisters, films, bottles, tubs, cutlery and knives, cups, coffee capsules and straws. The trays can be thermoformed mono- or multilayer trays.

The final aspect of the present invention relates to the use of the packaging described above for contact with, transport and/or storage of products. These products are preferably perishable goods such as cosmetics, pharmaceuticals, biomedical products, personal hygiene products and foodstuffs.

Throughout the description and the claims, the word "comprises" and its variants do not intend to exclude other technical features, additives, components or steps. For those skilled in the art, other objects, advantages and features of the invention may be inferred from both the description and the embodiment of the invention. The following examples and figures are provided by way of example and are not intended to limit the present invention.

### BRIEF DESCRIPTION OF THE FIGURES

**FIG. 1** shows scanning electron microscopy (SEM) of PACKAGING 3, showing the good dispersion and adhesion of the mixture of the rigid and elastomeric polymer, as a result of the addition of the compatibilizing additive Joncryl ADR-4400.
**FIG. 2** shows scanning electron microscopy (SEM) of PACKAGING 5, showing the good dispersion and adhesion of the mixture of the rigid and elastomeric polymer, compatibilizing additive and calcium carbonate.
**FIG. 3** shows X-ray diffraction of PACKAGING 3 and PACKAGING 5, where it can be observed that the mineral acts as an anti-nucleating agent, reducing the crystallinity of the resin and preventing brittleness.
**FIG. 4** shows a diagram of the process of obtaining the multilayer system of example PACKAGING 10 based on: monolayer structure of PHB composite (described in example PACKAGING 2), barrier layer of electrospun fibers of EVOH, active layer of electrospun fibers of PHBV20 containing cinnamaldehyde and a food contact layer.

### EXAMPLES

The invention will be illustrated below by means of different packaging examples obtained by the inventors that demonstrate the effectiveness of the product of the invention.

### PACKAGING 1:

A commercial-type polyhydroxyalkanoate (PHA), PHB 309, a biodegradable homopolyester produced and marketed by Biomer (Krailling, Germany), is used to manufacture the structural layer. The processing is performed in a D30 co-rotating twin-screw extruder by Construcciones Mecánicas Dupra, S.L. (Alicante, Spain). The screws have a diameter (D) of 25 mm and a length/diameter (L/D) ratio of 24. The equipment has 4 individual heating zones. The working conditions for processing were 185/180/175/170 °C and 40 rpm. The extruded strands, after passing through an annular die, are pelletized in an air knife. The resulting pellets are processed in a Haake Rheomex 252p single-screw extruder with a Maddock screw and a L/D of 25 coupled to a flat extrusion die prepared to obtain a film or films (of up to 250 microns) or sheets (over 250 microns) and calendered to form a reel with a controlled thickness. The resulting structural layer was obtained in the form of a sheet with an average thickness of 0.45 mm. All the samples were aged for 15 days at 25 °C and 40 % relative humidity to ensure the complete development of the crystallinity of the material, before their physical characterization and thermoforming.

The mechanical properties study was carried out in tensile tests up to failure to determine tensile strength at break in MD direction (extrusion direction of the sheet) according to standard ASTM D638 (specimen Type IV) in an AGS-X 500N universal testing machine by Shimadzu Corp. (Kyoto, Japan). Tear resistance was determined according to standard UNE-EN ISO 6383 in materials in the form of film and with the geometry specified by the standard. The measurement consists of fixing to each of the two grippers one of the two strips resulting from the cut on the left end, pulling on them and recording the force needed for the cut to go through and reach the edge of the sample at the end opposite the start of the cut. The results which are shown correspond with the maximum force value needed for the crack to go through in the transverse direction with respect to the extrusion direction, divided by the thickness of the analyzed specimen. Typical tear resistance of a sheet of commercial material today of the type used to make trays (PET) under testing conditions similar to those used in the present invention is about 40 N/mm. The mechanical rigidity of a tray made of PP is typically 1300 MPa. This data was used as a reference to ensure tear resistance and minimum mechanical rigidity of the packaging developed in this invention.

The structural layer was thermoformed in the thermoforming machine (SB 53c, Illig, Helmut Roegele, Germany) at 600 °C for 30 seconds, and then a vacuum is applied, forcing the sheet to acquire the shape of the mold.

The results are shown in Table 1. This sample of Packaging 1 has a high elastic modulus and deficient tear resistance. Additionally, elongation at break is low and thermoformability is poor.

**Table 1. Mechanical properties and thermoformability of PACKAGING 1-10.**

| **Sample** | **Elastic modulus (MPa)** | **Elongation at break (%)** | **Tear resistance, (N/mm)** | **Thermoformability** |
|---|---|---|---|---|
| PACKAGING 1 | 2600 ✔ | 4.5 × | 10.3 × | × |
| PACKAGING 2 (low cost, made from waste) | 2710 ✔ | 4.1 × | 8.0 × | ✔ |
| PACKAGING 3 | 1490 ✔ | 19.3 ✔ | 75.2 ✔✔ | ✔ |
| PACKAGING 4 (low cost, made from waste) | 1780 ✔ | 4.1 × | 8.9 × | ≈ |
| PACKAGING 5 (very low cost) | 1610 ✔ | 35.4 ✔ | 71.4 ✔✔ | ✔ |
| PACKAGING 6 (very low cost, made from waste) | 1410 ✔ | 9.1 ≈ | 40.5 ✔ | ✔ |
| PACKAGING 7 (very low cost, made from waste) | 1400 ✔ | 91.5 ✔✔ | 68.6 ✔✔ | ✔✔ |
| PACKAGING 8 | 2560 ✔ | 4.5 × | 20 ≈ | × |
| PACKAGING 9 | 2680 ✔ | 4 × | 15 ≈ | ✔ |
| PACKAGING 10 | 2500 ✔ | 4.3 × | 18 ≈ | ✔ |

| | | | | |
|---|---|---|---|---|
| Note: ✔✔ Excellent, ✔ Good, ≈ Fair, × Bad | | | | |

### PACKAGING 2:

To manufacture the structural layer, PHB 309, the same biopolymer used to obtain PACKAGING 1, is used as the base material. There are added to said material 10 g of lignocellulose originating from waste to reduce the cost for every 100 grams of PHB, i.e. at a concentration of 10 phr, wherein said lignocellulose has been supplied by Unió Coop (Tarragona, Spain) after the mechanical grinding and subsequent sieving of almond and hazelnut shell, and with a controlled grain size distribution below 200 micrometers. Likewise, DCP and TGIC, at 0.25 and 1 phr, respectively, are introduced to favor compatibility of the lignocellulose particles with the PHB matrix. Both reagents were acquired from Sigma Aldrich S.A (Madrid, Spain).

The entire mixture is processed in a twin-screw extruder and a sheet is obtained which is later thermoformed into a tray under the same conditions described for obtaining PACKAGING 1. The mechanical properties are determined subsequently after 15 days of aging under the same conditions applied in PACKAGING 1. Table 1 includes the obtained results. This structural layer has an elastic modulus greater than that of the packaging described in example PACKAGING 1, low elongation at break, lower tear resistance, but improved thermoformability.

### PACKAGING 3:

To improve elongation at break, tear resistance and thermoformability of the structural layer described in example PACKAGING 1, there is added to the PHB base material (PHB 309, Biomer) 40 % of a commercial biodegradable elastomer PBAT with commercial reference Ecoflex F blend C1200 and 2 phr of Joncryl ADR-4400, both by BASF S.A. (Barcelona, Spain).

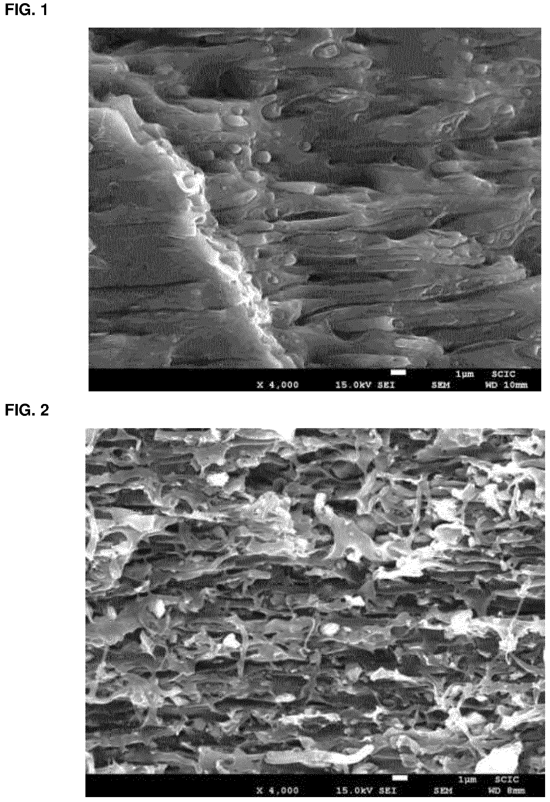

All these additives are mixed under the same conditions used in PACKAGINGS 1 and 2, obtaining sheets with an average thickness of 0.45 mm. As described for the preceding examples, the obtained sheet is processed by thermoforming to generate a tray. Table 1 shows the mechanical results of the sheet and the thermoformability characteristics. This structural layer has an elastic modulus less than that of the packaging described in example PACKAGING 1, but high elongation at break, good tear resistance and good thermoformability. These good mechanical results are attributed to close interaction between both polymers favored by the use of the compatibilizing agent Joncryl ADR-4400, as can be observed in Figure 1.

### PACKAGING 4:

In another example, PHB (PHB 309, Biomer) is used as a base material and there is added to it 40 % of a commercial biodegradable elastomer PBAT (Ecoflex F blend C1200, BASF) and 2 phr of Joncryl ADR-4400 (BASF). To improve the rigidity of the packaging with respect to the example described in PACKAGING 3, there are added 10 g of lignocellulose per 100 g of polymer resin (PHB/PBAT). The lignocellulose has been obtained/produced by Unió Coop (Tarragona, Spain), as described in example PACKAGING 2.

All these additives are mixed under the same conditions used in PACKAGINGS 1-3, obtaining sheets with an average thickness of 0.45 mm. As described for the preceding examples, the obtained sheet is processed by thermoforming to generate a tray. Table 1 shows the mechanical results of the sheet and the thermoformability characteristics. The obtained sheet has a rigidity (modulus of elasticity) greater than that of PACKAGING 3 described in the preceding example but lower elongation at break and tear resistance. The thermoformability is acceptable, but worse than PACKAGING 3.

### PACKAGING 5:

In a new example, there are added to the PHB base material (PHB 309, Biomer) 40 % of a commercial biodegradable elastomer PBAT (Ecoflex F blend C1200, BASF) and 2 phr of Joncryl ADR-4400 (BASF). To reduce the cost and balance the mechanical properties with respect to the packaging described in example PACKAGING 3 and example PACKAGING 4, there are added 20 g of calcium carbonate (Omya, Oftringen, Switzerland) for every 100 g of resin containing biopolymer, i.e. 20 phr.

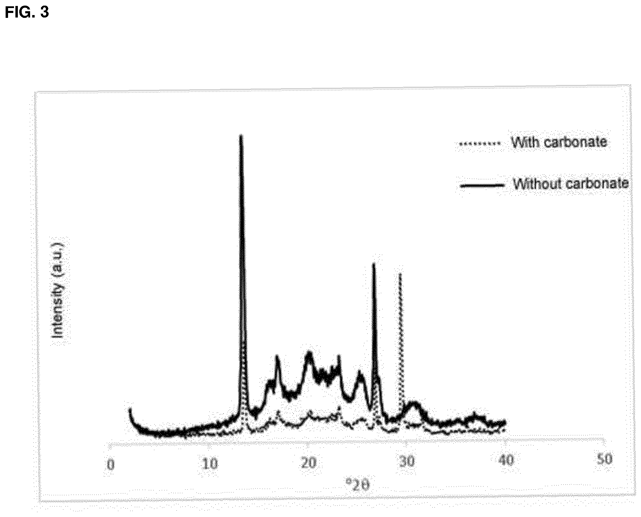

All these additives are mixed under the same conditions used in PACKAGING 1-4, obtaining sheets with an average thickness of 0.45 mm. As described for the preceding examples, the obtained sheet is processed by thermoforming to generate a tray. Table 1 shows the mechanical results of the sheet and the thermoformability characteristics. This packaging has an elastic modulus and elongation at break greater than those of the packaging described in example PACKAGING 3 and excellent tear resistance. Thermoformability is good. This change in behavior is attributed to an anti-nucleating effect of carbonate due to the fact that it is well dispersed in the resin (see morphology in Figure 2) and inhibits the development of the crystallinity of the PHB. Figure 3 shows the X-ray diffraction patterns for Packaging 3 and 5 and it can be seen that the addition of calcium carbonate leads to a drop in total crystallinity of the sample.

### PACKAGING 6:

In this example, there is added to the PHB base material 50 % of a commercial biodegradable elastomer PBAT (Ecoflex F blend C1200, BASF) and 2 phr of Joncryl ADR-4400 (BASF). Likewise, there are added 10 g of lignocellulose and 20 g of calcium carbonate per 100 g of polymer resin (PHB/PBAT), i.e. 10 and 20 phr, respectively. The lignocellulose has been obtained/produced by Unió Coop (Tarragona, Spain), as described in example PACKAGING 2. The same calcium carbonate as that described in EXAMPLE 5 is used. It should be highlighted that this example did not present sufficient tear resistance when the resin contained 40 % PBAT, as in the preceding cases. Therefore, the PBAT content was increased to 50 %.

All these additives are mixed under the same conditions used in PACKAGING 1-5, obtaining sheets with an average thickness of 0.45 mm. As described for the preceding examples, the obtained sheet is processed by thermoforming to generate a tray. Table 1 shows the mechanical results of the sheet and the thermoformability characteristics. This packaging has an acceptable elastic modulus and elongation at break. Tear resistance and thermoformability are good.

### PACKAGING 7:

To manufacture this packaging, PHB (PHB 309, Biomer) is used as the base material and there is added 12 % of low-cost elastomeric PHBV obtained from waste produced, on a pilot plant scale, at NOVA University (Lisbon, Portugal). To obtain this biodegradable copolyester, mixed microbial cultures fed with fermented fruits obtained from fruit pulps supplied by SumolCompal S.A. (Portugal) obtained as industrial waste from the juice industry were used. The HV fraction in the copolymer is about 20 mol% (PHBV20). There is also incorporated 40 % of commercial biodegradable elastomer PBAT (Ecoflex F blend C1200, BASF S.A.) and 2 phr of Joncryl ADR-4400 (BASF S.A.). Likewise, there are added 20 g of calcium carbonate per 100 g of polymer resin, i.e. 20 phr with respect to PHB/PHBV/PBAT.

All these additives are mixed under the same conditions used in PACKAGING 1-5, obtaining sheets with an average thickness of 0.45 mm. As described for the preceding examples, the obtained sheet is processed by thermoforming to generate a tray. Table 1 shows the mechanical results of the sheet and the thermoformability characteristics. This packaging has an acceptable elastic modulus and excellent elongation at break, tear resistance and thermoformability.

When 10 phr of microcellulose from waste are additionally added to this mixture, as in previous examples, the rigidity of the material (1650 MPa) increases while all the other properties remain within the range of acceptance, and therefore it can also be considered a material suitable for making an optimal packaging when it is needed to further reduce the cost and increase rigidity.

### PACKAGING 8:

The purpose of this example is to show a bilayer tray according to the present invention with mechanical properties suitable for use as a packaging. The sheet obtained in example PACKAGING 1 is used as a structural layer, and a layer consisting of elastomeric electrospun fibers of PHBV20 derived from fruit waste is deposited on it by means of the electrospinning technique. The manner of obtaining PHBV20 was described in the example for Packaging 7.

To generate the fibers, a solution of 8 % PHBV20 (weight/vol) in chloroform/butanol 75:25 (vol/vol) is prepared, with both solvents being obtained from Sigma Aldrich S.A. (Madrid, Spain), and stirred at room temperature for 24 h. To that end, a high-performance Fluidnatek® LE-10 pilot plant device manufactured by Bioinicia S.L. (Valencia, Spain) is used. The equipment is operated by means of a motorized needle injector, horizontally scanning a collector comprising a roller where the structural layer is arranged. Table 2 includes the conditions for processing by means of electrospinning PHBV20. This experiment is carried out under ambient conditions, i.e. 25 °C and 40 % RH.

**Table 2. Optimal conditions selected during electrospinning for PHBV20.**

| **Sample** | **Concentration (% by weight)** | **Voltage (kV)** | **Flow rate (ml/h)** | **Needle-collector distance (cm)** | **Time (h)** |
|---|---|---|---|---|---|
| PHBV20 | 8 | 13 | 6 | 21.5 | 2 |

The resulting multilayer structure is subjected to thermoforming in the equipment under the conditions described in the preceding examples. The layers are sealed at the same time the tray is obtained, the bilayer packaging thus being formed. The layer of the electrospun film, after thermoforming, has a thickness of about 10 microns. The mechanical results were measured when the bilayer structure was subjected to an annealing process at 125 °C for 5 seconds to promote the formation of a film from the fibers by coalescence and therefore with adherence between layers.

Table 1 shows the mechanical results of the bilayer sheet and the thermoformability characteristics. This packaging has a high elastic modulus, low elongation at break, higher tear resistance than PACKAGING 1 and improved thermoformability. Therefore, the route for applying electrospun layers on the substrate leads to a material with higher tear resistance and better thermoformability.

### PACKAGING 9:

The purpose of this example is to show a bilayer sheet according to the present invention with mechanical and barrier properties. The sheet obtained in example PACKAGING 2 is used as a structural layer, and a barrier layer consisting of electrospun fibers of PHBV/BNC is deposited on it by means of the electrospinning technique. To that end, commercial PHBV ENMAT™ Y1000P, produced by Tianan Biologic Materials (Ningbo, China) is used in the form of pellets, with an HV molar fraction in the copolymer of 3 %.

To generate the fibers, a solution of 10 % commercial PHBV in tetrafluoroethylene (TFE) is prepared, ≥99 % purity, from Sigma Aldrich S.A. (Madrid, Spain). 10 % of a BNC solution is incorporated to this solution. Bacterial cellulose was obtained from strains of Gluconacetobacter xylinus 735 (Spanish Type Culture Collection). The bacterial cellulose layer was cut into small pieces and boiled, several times, first in distilled water and after than in a solution of sodium hydroxide (NaOH) at 10 % (vol/vol) to eliminate bacterial cells and the absorbed culture medium. Then the pH of the resulting solution was reduced to a value of 7 by boiling in distilled water on repeated occasions. Later, the pieces of bacterial cellulose were dried to eliminate all the absorbed water, and next, they were treated with a solution of sulfuric acid (H₂SO₄) in water at 50 % (vol/vol) using a cellulose in acid ratio of about 7 g/l. Lastly, a white precipitate of the BNC was formed after 10 centrifugation cycles and washing with water. The BNC content in water was adjusted to 2 %. Additionally, a surfactant Tween 80 (Sigma Aldrich S.A., Madrid, Spain) was added at 2 grams for every 100 grams of TFE to improve the processing of the suspension before electrospinning. Table 3 reflects the percentages used.

**Table 3. Proportion of components in the PHBV/CNC solution**

| **PHBV (g)** | **BNC solution (g)** | **TFE (g)** | **% of BNC in PHBV** | **Tween (g)** |
|---|---|---|---|---|
| 10 | 10 | 100 | 2 | 2 |

Next, the prepared solution based on PHBV was electrospun onto the mentioned structural layer by means of the electrospinning technique. The process is performed by means of a high-performance Fluidnatek® LE-10 pilot plant device manufactured by Bioinicia S.L. (Valencia, Spain). The equipment is operated by means of a motorized needle injector, horizontally scanning a collector comprising a roller where the structural layer is arranged. Table 4 includes the conditions for processing by means of electrospinning PHBV. These experiments are carried out under ambient conditions, i.e. 25 °C and 40 % RH.

**Table 4. Optimal conditions selected during electrospinning for commercial PHBV.**

| **Sample** | **Concentration (% by weight)** | **Voltage (kV)** | **Flow rate (ml/h)** | **Needle-collector distance (cm)** | **Time (h)** |
|---|---|---|---|---|---|
| PHBV | 10 | 19 | 6 | 15 | 2 |

The resulting bilayer structure is then subjected to thermal treatment in a 4122 hot plate press by Carver, Inc. (Indiana, USA) at 160 °C for 5 seconds without pressure. The electrospun film, after annealing, has a thickness of about of 10 microns.

The bilayer sheet, with the layers already sealed, is subjected to thermoforming in the equipment under the conditions described in the preceding examples. The layer of the electrospun film, after thermoforming, has a thickness of about 10 microns.

Table 1 shows the mechanical results of the bilayer sheet and the thermoformability characteristics. As can be seen, this packaging has mechanical properties similar to those of PACKAGING 2, but with higher tear resistance.

As can be observed in Table 5, the barrier properties of the developed bilayer packaging are better in terms of an oxygen barrier compared to the monolayer packaging containing PHB described in EXAMPLE 2.

**Table 5. Water vapor permeability (WVP), D-limonene permeability (LP) and oxygen permeability (OP) values of the obtained multilayer. The monolayer PHB values are included by way of control.**

| **Structure** | **WVP x 10¹⁷ (kg·m^{- 2}·Pa⁻¹·s⁻¹)** | **LP x 10¹⁷ (kg·m⁻²·Pa⁻¹·s^{- 1})** | **OP x 10²¹ (m³·m^{- 2}·Pa⁻¹·s⁻¹)** |
|---|---|---|---|
| PACKAGING 2 | 0.72 ± 0.04 | 0.83 ± 0.08 | 0.32 ± 0.02 |
| PACKAGING 9 | 0.60 ± 0.04 | 0.78 ± 0.08 | < 0.01 * |

| | | | |
|---|---|---|---|
| * Not detectable in measurement equipment | | | |

### PACKAGING 10:

The purpose of this example is to show a complete multilayer tray according to the present invention with mechanical, barrier and active properties. For this purpose, there is initially deposited on the structural layer described in example PACKAGING 2 a barrier layer of electrospun fibers of EVOH44 (Soarnol grade from Nippon Gohsei, Japan). Deposited on this bilayer structure, next, is another layer of electrospun fibers of elastomeric PHBV20 derived from fruit waste, as explained above, to which there is incorporated essential oil enriched in cinnamaldehyde in the solution before electrospinning (Cinnamomum, Sigma-Aldrich S.A., Madrid, Spain).

In the first electrospun layer of fibers of EVOH44, the solvents used are TFE, ≥ 99 % purity, acquired from Sigma Aldrich S.A. (Madrid, Spain), and isopropanol, 99.5 % purity, obtained from Acros Organics (Geel, Belgium). To generate the fibers, a solution of 6 % EVOH44 in a mixture of isopropanol/water 70:30 (vol/vol) is prepared and stirred at 70 °C for 24 h. Then, the solution is processed by means of electrospinning using a Fluidnatek® LE-10 pilot plant device by Bioinicia S.L. (Valencia, Spain). Next, to confer active properties to the packaging, another layer, in this case of PHBV20, is electrospun onto the obtained structure. To that end, a solution of 8 % PHBV20 in chloroform/butanol 75:25 (vol/vol) is prepared, being obtained from Sigma Aldrich S.A. (Madrid, Spain), and 10 % cinnamaldehyde is incorporated to it. This mixture is stirred at room temperature for 24 h in a hermetically sealed packaging. Table 6 includes the conditions for processing each material. All the experiments were carried out under ambient conditions, i.e. 25 °C and 40 % RH.

**Table 6. Optimal conditions selected during electrospinning for the solution of EVOH and PHBV20 containing cinnamaldehyde.**

| **Sample** | **Concentration (% by weight)** | **Voltage (kV)** | **Flow rate (ml/h)** | **Needle-collector distance (cm)** | **Time (h)** |
|---|---|---|---|---|---|
| EVOH44 | 6 | 15 | 5 | 16 | 2 |
| PHBV20/cinnamaldehyde | 8 | 12 | 6 | 15 | 1 |

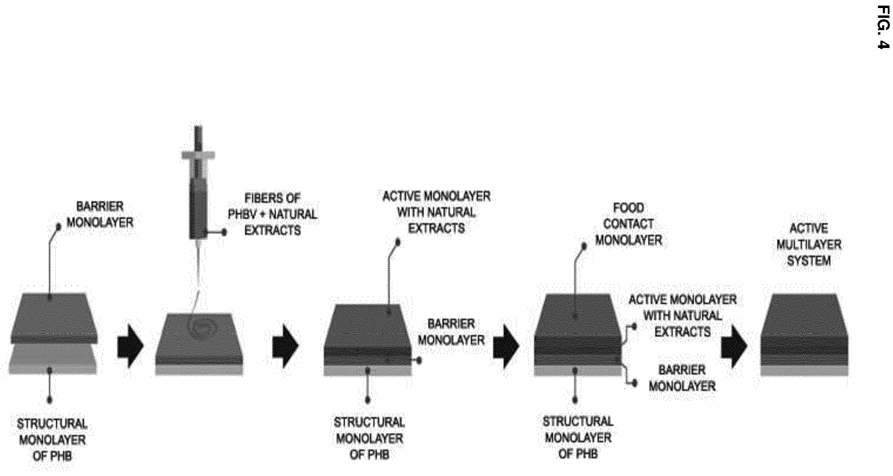

The homogeneous deposition of fibers of PHBV20 with oregano essential oil on the surface of the layer of EVOH44 is thereby achieved. Lastly, there is incorporated a PHBV film with a thickness of 25 microns and having an HV content of 8 mol.% (PHBV8) with commercial reference BV301025 by Goodfellow Cambridge Ltd (Huntingdon, United Kingdom), allowed for contact with food and obtained by means of blow extrusion. The purpose of this monolayer film is to be in direct contact with the product to be packaged and prevent migrations from the rest of the layers onto the product, i.e. it acts as a food contact layer. Figure 4 describes the process that is followed and the multilayer structure that is finally obtained.

To generate a final packaging with the desired properties, the multilayer structure is finally processed by thermoforming, following the same conditions described in the preceding examples. The layers are sealed at the same time the tray is obtained, the multilayer packaging thus being formed. In this case, the film is manually fixed to the frame of the thermoforming machine, but it could also be incorporated in the line in the form of a reel during thermoforming. The mechanical results were generated on the multilayer structure subjected to an annealing process for adhering the layers before testing.

Table 1 shows the mechanical results and the thermoformability characteristics of the obtained multilayer packaging. As can be seen, this packaging has mechanical properties and thermoformability similar to those of PACKAGING 2, but with higher tear resistance.

As can be observed in Table 7, the barrier properties of the developed bilayer packaging are better in terms of barrier compared to the monolayer packaging based on PHB described in example PACKAGING 2.

**Table 7. Water vapor permeability (WVP), D-limonene permeability (LP) and oxygen permeability (OP) values of the obtained multilayer. The monolayer PHB values are included by way of control.**

| **Structure** | **WVP x 10¹⁷ (kg·m^{- 2}·Pa⁻¹·s⁻¹)** | **LP x 10¹⁷ (kg·m⁻²·Pa^{- 1}·s⁻¹)** | **OP x 10²¹ (m³·m⁻²·Pa^{- 1}·s⁻¹)** |
|---|---|---|---|
| PACKAGING 2 | 0.72 ± 0.04 | 0.83 ± 0.08 | 0.32 ± 0.02 |
| PACKAGING 10 | 0.10 ± 0.02 | 0.33 ± 0.08 | < 0.01 * |

| | | | |
|---|---|---|---|
| * Not detectable in measurement equipment | | | |

Lastly, the antimicrobial activity of the final packaging was evaluated by means of Japanese industrial standard JIS Z 2801 (ISO 22196: 2007) against strains of *S*. *aureus* (ATCC 6538p) and strains of *E*. *coli* (ATCC 25922). To that end, a suspension of microorganisms was deposited on the face of the food contact layer in samples having sizes of 1.5 x 1.5 cm² when open. They are incubated at 25 °C and at a relative humidity of 95 % for 24 h. Then the bacteria are recovered with phosphate-buffered saline PBS, diluted 10 times and incubated at 37 °C for 24 h to quantify the number of viable bacteria by conventional plate count. The antimicrobial activity was evaluated at 1, 8 and 15 days. The antimicrobial activity (R) value is calculated by determining log₁₀ (N₀/Nₜ), wherein N₀ is the average number of viable bacteria cells in the untreated test piece after 24 h and Nₜ is the average number of viable bacteria cells in the antimicrobial sample after 24 h. The results are included in Table 8.

**Table 8. R values against E. coli and S. aureus of the developed multilayer structures (packaging) with cinnamaldehyde. PACKAGING 2 is used as a test control.**

| **Bacteria** | **Days** | **PACKAGING 2 Log (CFU/ml)** | **PACKAGING 10 Log (CFU/ml)** | **R** |
|---|---|---|---|---|
| | 1 | 6.80 ± 0.09 | 4.50 ± 0.11 | 2.3 ± 0.09 |
| *S*. *aureus* | 8 | 6.76 ± 0.21 | 4.06 ± 0.19 | 2.7 ± 0.23 |
| | 15 | 6.89 ± 0.19 | 3.79 ± 0.15 | 3.1 ± 0.17 |
| | 1 | 6.69 ± 0.07 | 4.89 ± 0.55 | 1.8 ± 0.27 |
| *E. coli* | 8 | 6.72 ± 0.33 | 4.62 ± 0.17 | 2.1 ± 0.31 |
| | 15 | 6.79 ± 0.45 | 4.39 ± 0.19 | 2.4 ± 0.33 |

As can be seen, given its R values > 2, the multilayer packaging described in the present invention presents a high biocidal effectiveness against bacteria present in foods. This is due to the capacity of efficiently releasing the cinnamaldehyde essential oil.

## Claims

1. A biodegradable packaging, **characterized in that** it comprises a thermoformable structural layer (a) having a thickness between 0.015 mm and 10 mm which comprises
∘ a resin comprising:
• a polymer matrix containing polyhydroxyalkanoate at a percentage by weight of up to 75 % with respect to the total resin,
• a second biodegradable polymer phase selected from polyurethanes, elastomeric polyhydroxyalkanoates, biodegradable thermoplastic elastomers, polycaprolactones, polylactic acid, and a combination thereof, at a percentage by weight of up to 50 % with respect to the total resin,
wherein the sum of the percentages by weight of the polymer matrix and of the second polymer phase does not exceed 100 % in the resin;
∘ functional additives selected from
• a rigid mineral filler at a content of up to 60 parts for every 100 parts of resin,
• compatibilizing additives at a content of up to 10 parts for every 100 parts of resin, and
• a combination thereof.

2. The biodegradable packaging according to claim 1, wherein the thermoformable structural layer (a) further comprises a renewable and/or biodegradable rigid filler at a content of up to 40 parts for every 100 parts of resin as a functional additive.

3. The biodegradable packaging according to any of claims 1 or 2, wherein the thickness of the packaging is between 0.1 mm and 1 mm.

4. The biodegradable packaging according to any of claims 1 to 3, wherein the polymer matrix containing polyhydroxyalkanoate is selected from poly(3-hydroxybutyrate), poly(3-hydroxybutyrate-co-valerate), polylactic acid, and a combination thereof.

5. The biodegradable packaging according to claim 4, wherein the polymer matrix containing polyhydroxyalkanoate of the thermoformable structural layer (a) is made of poly(3-hydroxybutyrate) .

6. The biodegradable packaging according to any of claims 1 to 5, wherein the second biodegradable polymer phase contains poly(butylene adipate-co-terephthalate) (PBAT) and poly(3-hydroxybutyrate-co-valerate) (PHBV), and wherein the molar concentration of HV in PHBV is between 1 and 80.

7. The biodegradable packaging according to claim 6, wherein the molar concentration of HV in PHBV is between 7 and 60.

8. The biodegradable packaging according to any of claims 1 to 7, wherein the biodegradable rigid filler is selected from cellulose, lignocellulosic fillers, and a combination thereof.

9. The biodegradable packaging according to any of claims 1 to 8, wherein the mineral filler is selected from clays, calcium carbonate, hydrotalcites or double hydroxides, boron nitride, titanium dioxide, and a combination thereof, with or without being organomodified.

10. The biodegradable packaging according to any of claims 1 to 9, wherein the compatibilizing additives are selected from peroxides, isocyanurates, diisocyanates, acrylates, epoxy resins and compounds with epoxide functionality, phosphates, phosphites, polycarbodiimide, vegetable oils multi-functionalized with acrylate, epoxide or maleic groups, and a combination thereof.

11. The biodegradable packaging according to any of claims 1 to 10, which comprises
∘ a resin comprising
• a polymer matrix containing polyhydroxyalkanoate at a percentage by weight of 60 % with respect to the polymeric total of the resin,
• a second biodegradable elastomeric polymer phase at a percentage by weight of 40 % with respect to the polymeric total of the resin,
∘ a mineral filler containing calcium carbonate, with or without being organomodified, at a content of 20 parts for every 100 parts of resin,
∘ and a compatibilizing additive at a content of 2 parts for every 100 parts of resin.

12. The biodegradable packaging according to any of claims 1 to 10, which comprises
∘ a resin comprising
• a polymer matrix containing polyhydroxyalkanoate at a percentage by weight of 50 % with respect to the total resin,
• a second biodegradable elastomeric polymer phase at a percentage by weight of 50 % with respect to the total resin,
∘ a renewable and biodegradable filler containing cellulose at a content of 10 parts for every 100 parts of resin,
∘ a mineral filler containing calcium carbonate, with or without being organomodified, at a content of 20 parts for every 100 parts of resin,
∘ and a compatibilizing additive at a content of 2 parts for every 100 parts of resin.

13. The biodegradable packaging according to any of claims 1 to 12, further comprising a self-adhesive gas and vapor barrier layer (b), having a thickness between 0.1 µm and 100 µm, located on the structural layer (a) comprising a coating in the form of electrospun fibers of polymers and biopolymers with gas and vapor barrier properties.

14. The biodegradable packaging according to claim 13, wherein the composition of the self-adhesive gas and vapor barrier layer (b) is selected from polyhydroxyalkanoates, proteins, polysaccharides, lipids, polylactic acid, polyvinyl alcohol, ethylene-vinyl alcohol copolymers, poly(vinylidene chloride), poly(lactic-co-glycolic acid) and poly(glycolic acid).

15. The biodegradable packaging according to any of claims 13 or 14, wherein the self-adhesive gas and vapor barrier layer (b) further comprises particles and/or sheets having a nanometric thickness at a percentage by weight of between 0.01 % and 40 % with respect to the polymeric total of the self-adhesive gas and vapor barrier layer (b).

16. The biodegradable packaging according to any of claims 1 to 12, further comprising a gas and vapor barrier layer obtained by casting (b) of cellulose nanocrystals, nanofibrillated cellulose, microfibrillated cellulose, bacterial nanocellulose, with or without being organomodified, and a combination thereof.

17. The biodegradable packaging according to claim 16, further comprising a self-adhesive layer, located between layers (a) and (b) and/or on layer (b), of electrospun fibers of polymers and biopolymers selected from polyhydroxyalkanoates, proteins, polysaccharides, lipids, polylactic acid, polyvinyl alcohol, ethylene-vinyl alcohol copolymers, poly(vinylidene chloride), poly(lactic-co-glycolic acid) and poly(glycolic acid).

18. The biodegradable packaging according to any of claims 13 to 17, wherein the thermoformable structural layer (a) has received corona treatment to facilitate adhesion with the barrier layer (b).

19. The biodegradable packaging according to any of claims 13 to 18, further comprising at least one self-adhesive active layer (c) selected from
- a self-adhesive antimicrobial active layer (c), having a thickness between 0.1 µm and 100 µm, located on the self-adhesive gas and vapor barrier layer (b) consisting of an electrospun layer of biodegradable polymer, preferably polyhydroxyalkanoate, comprising an antimicrobial active agent, or
- a self-adhesive active layer (c), having a thickness between 0.1 µm and 100 µm, located on the self-adhesive gas and vapor barrier layer (b) consisting of an electrospun layer of biodegradable polymer, preferably polyhydroxyalkanoate, comprising at least one active agent selected from oxygen scavengers, moisture absorbers, flavor regulators, ethylene absorbers, and a combination thereof; and
- a combination thereof.

20. The biodegradable packaging according to claims 13 to 18, further comprising a self-adhesive active layer (c) having a thickness between 0.1 µm and 100 µm, located on the self-adhesive gas and vapor barrier layer (b) consisting of an electrospun layer of biodegradable polymer, preferably polyhydroxyalkanoate, comprising an active agent selected from oxygen scavengers, moisture absorbers, flavor regulators, ethylene absorbers, an antimicrobial agent, and a combination thereof.

21. The biodegradable packaging according to any of claims 19 or 20, further comprising a layer for direct contact with the packaged product (d), located on the self-adhesive active layer (c), having a thickness between 10 µm and 100 µm consisting of a layer of a biodegradable polymer, preferably polyhydroxyalkanoate.

22. A method of obtaining the packaging according to claim 21, **characterized in that** it comprises the following steps:
i) manufacturing a thermoformable structural layer (a) by means of melt extrusion;
ii) manufacturing a self-adhesive gas and vapor barrier layer (b) on the structure obtained in (i) by means of electrodynamic processes, aerodynamic processes or a combination of both;
iii) manufacturing
• at least one self-adhesive active layer (c) on the structure obtained in (ii) selected from
- a self-adhesive antimicrobial active layer (c), having a thickness between 0.1 µm and 100 µm, located on the self-adhesive gas and vapor barrier layer (b) consisting of an electrospun layer of biodegradable polymer, preferably polyhydroxyalkanoate, comprising an antimicrobial active agent, or
- a self-adhesive active layer (c), having a thickness between 0.1 µm and 100 µm, located on the self-adhesive gas and vapor barrier layer (b) consisting of an electrospun layer of biodegradable polymer, preferably polyhydroxyalkanoate, comprising at least one active agent selected from oxygen scavengers, moisture absorbers, flavor regulators, ethylene absorbers, and a combination thereof; and
- a combination thereof;
• or a self-adhesive active layer having a thickness between 0.1 µm and 100 µm, located on the self-adhesive gas and vapor barrier layer (b) consisting of an electrospun layer of biodegradable polymer, preferably polyhydroxyalkanoate, comprising an active agent selected from oxygen scavengers, moisture absorbers, flavor regulators, ethylene absorbers, an antimicrobial agent, and a combination thereof;
by means of electrodynamic processes, aerodynamic processes or a combination of both;
iv) manufacturing a layer for direct contact with the product (d) on the structure obtained in (iii) by means of melt extrusion, electrodynamic processes, aerodynamic processes or a combination of electrodynamic processes and aerodynamic processes; and
v) thermoforming the final structure obtained in step (iv).

23. The method according to claim 22, wherein steps (ii) and (iii) are carried out by means of an electrodynamic electrospinning process.

24. The method according to any of claims 22 or 23, wherein step (iv) is carried out by means of a casting or blow extrusion process.

25. The method according to any of claims 22 to 24, wherein step (iv) further comprises a step (iv') between step (iv) and step (v) for thermal treatment at a temperature less than the melting temperature of the structural layer (a).

26. The biodegradable packaging according to any of claims 1 to 21, wherein the packaging is selected from the list consisting of trays, plates, films, bags, blisters, bottles, tubs, cutlery and knives, cups, coffee capsules and straws.

27. Use of the packaging according to claim 26 for contact with, transport and/or storage of perishable goods.
